# EUROPEAN PATENT APPLICATION

(11) **EP 2 075 062 A1**
(43) Date of publication of application: **01.07.2009**
(21) Application number: 07829781.9
(22) Date of filing: 15.10.2007
(51) Int. Cl.: B01J 23/63, B01D 53/94, F01N 3/10

(54) **EXHAUST GAS PURIFICATION CATALYST**

(30) Priority: 20.10.2006 JP 2006286993
(71) Applicant: Cataler Corporation, Kakegawa-shi Shizuoka 437-1492 (JP)
(72) Inventor: SATO, Noboru, Shizuoka 437-1492 (JP); MIZUKAMI, Tomohito, Shizuoka 437-1492 (JP)
(74) Representative: Luderschmidt, Schüler & Partner
(86) International application number: PCT/JP2007/070047
(87) International publication number: WO 2008/047742

(57) **Abstract**

NO_{X} emission is decreased both in the transient phase and in the cold start phase. An exhaust gas-purifying catalyst (1) includes an oxygen storage material (32) having an average particle diameter falling within a range of 1 nm to 1,000 nm.

## Description

### Technical Field

The present invention relates to an exhaust gas-purifying catalyst, in particular, to an exhaust gas-purifying catalyst including oxygen storage material.

### Background Art

Until today, as an exhaust gas-purifying catalyst that treats exhaust gas of an automobile, etc., a three-way catalyst with a precious metal carried by a porous carrier made of an inorganic oxide such as alumina has been widely used. In the three-way catalyst, the precious metal plays the role in promoting reduction of nitrogen oxides (NO_{X}) and oxidations of carbon monoxide (CO) and hydrocarbons (HC). Further, the porous carrier plays the roles in increasing the specific surface area of the precious metal and suppressing the sintering of the precious metal by dissipating heat generated by the reactions.

JP-A 1-281144, JP-A 9-155192 and JP-A 9-221304 each describes an exhaust gas-purifying catalyst using cerium oxide or an oxide containing cerium and another metal element. These oxides are oxygen storage materials having an oxygen storage capacity. When an oxygen storage material is used in a three-way catalyst, the oxidation and reduction reactions can be optimized.

However, it is difficult for the three-way catalyst using an oxygen storage material to achieve an excellent performance both in the state just after starting an engine and in the state the engine is driven continuously.

For example, when the content of the oxygen storage material is increased, NO_{X} emission in the cold start phase of the emission test cycle, which is defined in Federal Test Procedure, FTP75, can be decreased. However, in this case, NO_{X} emission in the transient phase of the cycle increases.

When the content of the oxygen storage material is decreased, NO_{X} emission in the transient phase can be decreased. However, in this case, NO_{X} emission in the cold start phase increases.

As described above, it is difficult to decrease NO_{X} emission both in the transient phase and in the cold start phase.

### Disclosure of Invention

An object of the present invention is to decrease NO_{X} emission both in the transient phase and in the cold start phase.

According to an aspect of the present invention, there is provided an exhaust gas-purifying catalyst including an oxygen storage material having an average particle diameter falling within a range of 1 nm to 1,000 nm.

### Brief Description of Drawings

FIG. 1 is a perspective view schematically showing an exhaust gas-purifying catalyst according to an embodiment of the present invention;
FIG. 2 is an enlarged cross-sectional view schematically showing a part of the exhaust gas-purifying catalyst shown in FIG. 1;
FIG. 3 is a bar graph showing NO_{X} emissions; and
FIG. 4 is a graph showing a relationship between an average particle diameter of an oxygen storage material and NO_{X} emission in the cold start phase.

### Best Mode for Carrying Out the Invention

An embodiment of the present invention will be described below.

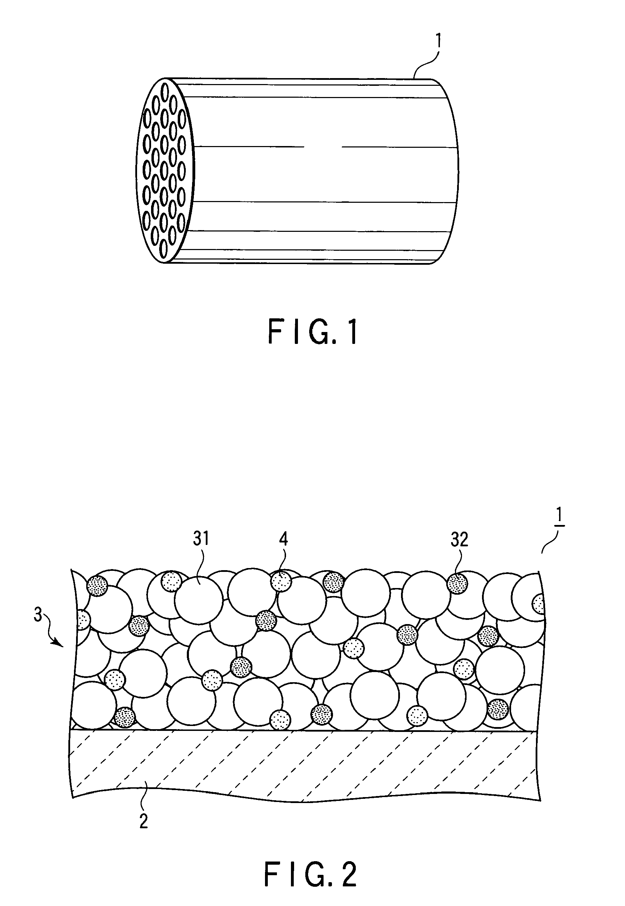

FIG. 1 is a perspective view schematically showing an exhaust gas-purifying catalyst according to an embodiment of the present invention. FIG. 2 is an enlarged cross-sectional view schematically showing a part of the exhaust gas-purifying catalyst shown in FIG. 1.

The exhaust gas-purifying catalyst 1 shown in FIGS. 1 and 2 is a monolith catalyst. The exhaust gas-purifying catalyst 1 includes a support substrate 2 such as monolith honeycomb support. Typically, the support substrate 2 is made of ceramics such as cordierite. The support substrate 2 may be made of metal.

On the wall of the support substrate 2, a catalyst carrier layer 3 is formed. The catalyst carrier layer 3 includes a porous carrier 31 and an oxygen storage material 32.

The porous carrier 31 is excellent in heat stability as compared with the oxygen storage material 32. As a material of the porous carrier 31, for example, alumina, zirconia or titania can be used.

An average particle diameter of the porous carrier 31 falls, for example, within a range of 1 µm to 30 µm, typically within a range of 2 µm to 20 µm.

The average particle diameter of the porous carrier 31 is a value determined by the following method. That is, pictures of five different areas of the catalyst carrier layer 3 are taken using a scanning electron microscope (hereinafter referred to as SEM). The magnification is set within a range of 1,000x to 10,000x. Then, ten particles of the porous carrier 31 shown on each SEM image are selected randomly and areas thereof are measured. Note that in the case where a selected particle of the porous carrier 31 is partially hidden behind other particles of the porous carrier 31, another particle of the porous carrier 31 is randomly selected instead of the particular particle of the porous carrier 31. Each area is thus obtained for fifty particles of the porous carriers 31, and a mean value thereof is calculated. Thereafter, a diameter of a circle having an area equal to the above-described mean value is calculated. This diameter is defined as the average particle diameter of the porous carrier 31.

The oxygen storage material 32 is, for example, cerium oxide or an oxide containing cerium and a rare-earth element other than cerium. As the oxide containing cerium and a rare-earth element other than cerium is a composite oxide and/or a solid solution. As the oxide containing cerium and a rare-earth element other than cerium, an oxide containing cerium and zirconium can be used, for example.

The oxygen storage material 32 may contain a metal element other than rare-earth elements. For example, the oxygen storage material 32 may be a solid solution of an oxide containing cerium and an oxide of an alkaline-earth metal. However, when the catalyst carrier layer 3 contains an alkali metal and/or a compound of an alkali metal in addition to the oxygen storage material 32, the heat resistance of the porous carrier 31 and the activity of the precious metal 4 to be described later will decrease, and when ceramic is used for the support substrate 2, cracking thereof is prone to occur. Therefore, typically, all components contained in the catalyst carrier layer 3 other than oxygen storage material 32 are alkali metal-free.

An average particle diameter of the oxygen storage material 32 falls within a range of 1 nm to 1,000 nm, typically within a range of 5 nm to 100 nm. When the oxygen storage material 32 has a sufficiently small average particle diameter, the exhaust gas-purifying catalyst exhibits an excellent performance both in the cold start phase and in the transient phase. Note that an oxygen storage material having an excessively small average particle diameter is difficult to manufacture.

The average particle diameter of the oxygen storage material 32 is a value determined by the following method. That is, pictures of five different fields of a surface of the catalyst carrier layer 3 are taken using a SEM. The magnification is set within a range of 10,000x to 100,000x. Then, ten particles of the oxygen storage material 32 shown on each SEM image are selected randomly and areas thereof are measured. Note that in the case where a selected particle of the oxygen storage material 32 is partially hidden behind other particles of the oxygen storage materials 32, another particle of the oxygen storage material 32 is randomly selected instead of the particular particle of the oxygen storage material 32. Each area is thus obtained for fifty particles of the oxygen storage material 32, and a mean value thereof is calculated. Thereafter, a diameter of a circle having an area equal to the mean value described above is calculated. This diameter is defined as the average particle diameter of the oxygen storage material 32.

A ratio of an average particle diameter of the porous carrier 31 with respect to the average particle diameter of the oxygen storage material 32 is set at, for example 5 or more, typically 50 or more. In general, when the ratio is large, the exhaust gas-purifying catalyst 1 exhibits an excellent performance both in the cold start phase and in the transient phase.

A proportion of the oxygen storage material 32 in the catalyst carrier layer 3 is set, for example, within a range of 1% to 80% by mass. Although it depends on the use conditions for the exhaust gas-purifying catalyst 1, when the ratio falls within the above-described range, the exhaust gas-purifying catalyst 1 generally exhibits an excellent performance both in the cold start phase and in the transient phase.

Above and/or below the catalyst carrier layer 3, it is possible to form another catalyst carrier layer or to stack two or more other catalyst carrier layers. When such a multilayer structure is employed and the catalyst carrier layer 3 closest to the support substrate 2 satisfies the criteria as described for the porous carrier 31 and the oxygen storage material 32, it is possible that other catalyst carrier layers satisfy or not satisfy the criteria.

The catalyst carrier layer 3 carries a precious metal 4. The precious metal 4 is, for example, an element of platinum group such as platinum, palladium and rhodium or a mixture thereof. In the case where one or more catalyst carrier layers are formed above and/or below the catalyst carrier layer 3, the precious metal 4 carried by the catalyst carrier layer 3 and precious metals carried by other catalyst carrier layers may be the same or different.

The exhaust gas-purifying catalyst 1 can achieve a sufficiently decreased NO_{X} emission both in the cold start phase and in the transient phase. Thus, as will be described below, the exhaust gas-purifying catalyst 1 is particularly suited for use in a starter converter in which the catalytic performance in the cold start phase is of importance.

Since conventional starter converters put premium on the exhaust gas-purifying performance under low temperature conditions, there are times when a sufficient exhaust gas-purifying performance cannot be achieved under high temperature conditions. In contrast, a starter converter using the above-described exhaust gas-purifying catalyst 1 achieves a sufficient exhaust gas-purifying performance not only under low temperature conditions but also under high temperature conditions. That is, this starter converter achieves an excellent exhaust gas-purifying performance in a wide temperature range. Thus, the above-described exhaust gas-purifying catalyst 1 is particularly suited for use in a starter converter in which the catalytic performance in the cold start phase is of importance.

Examples of the present invention will be described below.

### (Manufacture of catalyst A)

50g of θ-alumina, aqueous palladium nitrate containing 1g of palladium, and sol containing 100g of cerium-zirconium oxide as dispersed particles were mixed together to prepare slurry. Note that the cerium-zirconium oxide used herein was a solid solution of cerium oxide and zirconium and an atomic ratio of cerium to zirconium in this solid solution was 50:50. Note also that an average particle diameter of the cerium-zirconium oxide determined using a SEM was 5 nm. Hereinafter, the slurry is referred to as slurry A.

Then, a monolith honeycomb support made of cordierite and having a volumetric capacity of 1L was coated with the slurry A. The monolith honeycomb carrier was dried at 250°C for 1 hour.

Next, 90g of θ-alumina, aqueous rhodium nitrate containing 0.2g of rhodium, and 70g of cerium-zirconium oxide were mixed together to prepare slurry. Note that the cerium-zirconium oxide used herein was a solid solution of cerium oxide and zirconium and an atomic ratio of cerium to zirconium in this solid solution was 20:80. Note also that an average particle diameter of the cerium-zirconium oxide determined using a SEM was 5,000 nm.

Then, the above-described monolith honeycomb support was coated with this slurry. The monolith honeycomb carrier was dried at 250°C for 1 hour, and subsequently fired at 500°C for 1 hour.

An exhaust gas-purifying catalyst was thus manufactured. Hereinafter, the exhaust gas-purifying catalyst is referred to as catalyst A.

### (Manufacture of catalyst B)

50g of θ-alumina, aqueous palladium nitrate containing 1g of palladium, and sol containing 100g of cerium-zirconium oxide as dispersed particles were mixed together to prepare slurry. Note that the cerium-zirconium oxide used herein was a solid solution of cerium oxide and zirconium and an atomic ratio of cerium to zirconium in this solid solution was 50:50. Note also that an average particle diameter of the cerium-zirconium oxide determined using a SEM was 20 nm. Hereinafter, the slurry is referred to as slurry B.

An exhaust gas-purifying catalyst was manufactured by the same method as that described for the catalyst A except that the slurry B was used instead of the slurry A. Hereinafter, the exhaust gas-purifying catalyst is referred to as catalyst B.

### (Manufacture of catalyst C)

50g of θ-alumina, aqueous dinitrodiamino platinum containing 1g of platinum, and sol containing 100g of cerium-zirconium oxide as dispersed particles were mixed together to prepare slurry. Note that the cerium-zirconium oxide used herein was a solid solution of cerium oxide and zirconium and an atomic ratio of cerium to zirconium in this solid solution was 50:50. Note also that an average particle diameter of the cerium-zirconium oxide determined using a SEM was 100 nm. Hereinafter, the slurry is referred to as slurry C.

An exhaust gas-purifying catalyst was manufactured by the same method as that described for the catalyst A except that the slurry C was used instead of the slurry A. Hereinafter, the exhaust gas-purifying catalyst is referred to as catalyst C.

### (Manufacture of catalyst D)

50g of θ-alumina, aqueous palladium nitrate containing 1g of palladium, and sol containing 100g of cerium-zirconium oxide as dispersed particles were mixed together to prepare slurry. Note that the cerium-zirconium oxide used herein was a solid solution of cerium oxide and zirconium and an atomic ratio of cerium to zirconium in this solid solution was 50:50. Note also that an average particle diameter of the cerium-zirconium oxide determined using a SEM was 300 nm. Hereinafter, the slurry is referred to as slurry D.

An exhaust gas-purifying catalyst was manufactured by the same method as that described for the catalyst A except that the slurry D was used instead of the slurry A. Hereinafter, the exhaust gas-purifying catalyst is referred to as catalyst D.

### (Manufacture of catalyst E)

50g of θ-alumina, aqueous palladium nitrate containing 1g of palladium, and sol containing 100g of cerium-zirconium oxide as dispersed particles were mixed together to prepare slurry. Note that the cerium-zirconium oxide used herein was a solid solution of cerium oxide and zirconium and an atomic ratio of cerium to zirconium in this solid solution was 50:50. Note also that an average particle diameter of the cerium-zirconium oxide determined using a SEM was 900 nm. Hereinafter, the slurry is referred to as slurry E.

An exhaust gas-purifying catalyst was manufactured by the same method as that described for the catalyst A except that the slurry E was used instead of the slurry A. Hereinafter, the exhaust gas-purifying catalyst is referred to as catalyst E.

### (Manufacture of catalyst F)

50g of θ-alumina, aqueous palladium nitrate containing 1g of palladium, and sol containing 100g of cerium-zirconium oxide as dispersed particles were mixed together to prepare slurry. Note that the cerium-zirconium oxide used herein was a solid solution of cerium oxide and zirconium and an atomic ratio of cerium to zirconium in this solid solution was 50:50. Note also that an average particle diameter of the cerium-zirconium oxide determined using a SEM was 1,200 nm. Hereinafter, the slurry is referred to as slurry F.

An exhaust gas-purifying catalyst was manufactured by the same method as that described for the catalyst A except that the slurry F was used instead of the slurry A. Hereinafter, the exhaust gas-purifying catalyst is referred to as catalyst F.

### (Manufacture of catalyst G)

50g of θ-alumina, aqueous palladium nitrate containing 1g of palladium, and 100g of cerium-zirconium oxide were mixed together to prepare slurry. Note that the cerium-zirconium oxide used herein was a solid solution of cerium oxide and zirconium and an atomic ratio of cerium to zirconium in this solid solution was 50:50. Note also that an average particle diameter of the cerium-zirconium oxide determined using a SEM was 5 µm. Hereinafter, the slurry is referred to as slurry G.

An exhaust gas-purifying catalyst was manufactured by the same method as that described for the catalyst A except that the slurry G was used instead of the slurry A. Hereinafter, the exhaust gas-purifying catalyst is referred to as catalyst G.

### (Manufacture of catalyst H)

50g of θ-alumina, aqueous dinitrodiamino platinum containing 1g of platinum, and 100g of cerium-zirconium oxide were mixed together to prepare slurry. Note that the cerium-zirconium oxide used herein was a solid solution of cerium oxide and zirconium and an atomic ratio of cerium to zirconium in this solid solution was 50:50. Note also that an average particle diameter of the cerium-zirconium oxide determined using a SEM was 5 µm. Hereinafter, the slurry is referred to as slurry H.

An exhaust gas-purifying catalyst was manufactured by the same method as that described for the catalyst A except that the slurry H was used instead of the slurry A. Hereinafter, the exhaust gas-purifying catalyst is referred to as catalyst H.

### (Tests)

Each of the catalysts A to H was mounted on an automobile having an engine with a piston displacement of 2.2L. Then, each automobile was driven in LA#4 mode and NO_{X} emission was determined. To be more specific, NO_{X} concentrations in Bag 1 to Bag 3 were determined. Note that "LA#4 mode" is a test mode in the United States defined in FTP75. Note also that "Bag 1" represents an exhaust gas sampled in the cold start phase, "Bag 2" represents an exhaust gas sampled in the transient phase, and "Bag 3" represents an exhaust gas sampled in the hot start phase.

Next, an average particle diameter of the cerium-zirconium oxide as an oxygen storage material and an average particle diameter of alumina as a porous carrier were determined for each of the catalysts A to H. Note that the average particle diameters were determined by the above-described method, that is, the method using a SEM.

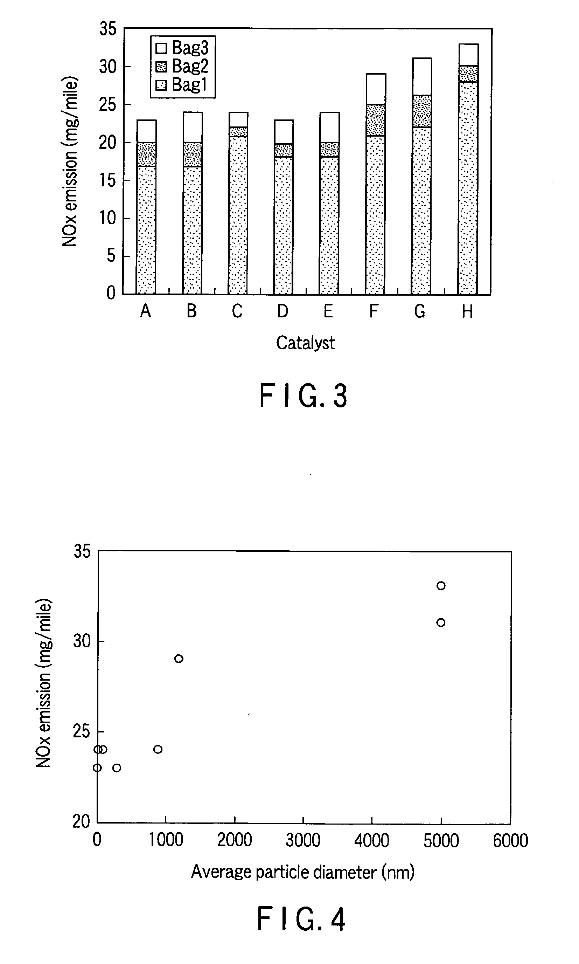

The results are summarized in the Table below and FIGS. 3 and 4.

**Table**

| | NO_{X} emission (mg/mile) | | | | Average particle diameter (nm) | |
|---|---|---|---|---|---|---|
| Catalyst | Bag 1 | Bag 2 | Bag 3 | Total | Oxygen Storage material | Porous carrier |
| A | 17 | 3 | 3 | 23 | 5 | 5,000 |
| B | 17 | 3 | 4 | 24 | 20 | 5,000 |
| C | 21 | 1 | 2 | 24 | 100 | 5,000 |
| D | 18 | 2 | 3 | 23 | 300 | 5,000 |
| E | 18 | 2 | 4 | 24 | 900 | 5,000 |
| F | 21 | 4 | 4 | 29 | 1,200 | 5,000 |
| G | 22 | 4 | 5 | 31 | 5,000 | 5,000 |
| H | 28 | 2 | 3 | 33 | 5,000 | 5,000 |

In the column of the above Table headlined with "Total", listed are the sums of NO_{X} emissions in the cold start phase, transient phase and hot start phase.

FIG. 3 is a bar graph showing NO_{X} emissions. FIG. 4 is a graph showing a relationship between an average particle diameter of an oxygen storage material and NO_{X} emission in the cold start phase. In FIG. 3, the ordinate represents NO_{X} emission. In FIG. 4, the abscissa represents an average particle diameter of an oxygen storage material, while the ordinate represents the sum of NO_{X} emissions in the cold start phase, transient phase and hot start phase.

As shown in the above Table and FIG. 4, the sums of NO_{X} emissions in the cold start phase, transient phase and hot start phase for the catalysts A to E were smaller that those for the catalysts F to H. Further, as shown in the above Table and FIG. 3, NO_{X} emissions in the cold start phase for the catalysts A to E were smaller than those for the catalyst F to H.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general invention concept as defined by the appended claims and their equivalents.

## Claims

1. An exhaust gas-purifying catalyst including an oxygen storage material having an average particle diameter falling within a range of 1 nm to 1,000 nm.

2. The exhaust gas-purifying catalyst according to claim 1, wherein the oxygen storage material is made of an oxide containing cerium oxide or an oxide containing cerium and a rare-earth element other than cerium.

3. The exhaust gas-purifying catalyst according to claim 1, wherein the average particle diameter of the oxygen storage material falls within a range of 5 nm to 100 nm.

4. The exhaust gas-purifying catalyst according to claim 1, comprising:
a support substrate;
a catalyst carrier layer supported by the support substrate and containing the oxygen storage material and a porous carrier; and
a precious metal carried by the catalyst carrier layer.

5. The exhaust gas-purifying catalyst according to claim 4, wherein an average particle diameter of the porous carrier falls within a range of 1 µm to 30 µm.

6. The exhaust gas-purifying catalyst according to claim 4, wherein the average particle diameter of the oxygen storage material falls within a range of 5 nm to 100 nm.

7. The exhaust gas-purifying catalyst according to claim 4, wherein the average particle diameter of the oxygen storage material falls within a range of 5 nm to 100 nm, and the average particle diameter of the porous carrier falls within a range of 2 nm to 20 nm.

8. The exhaust gas-purifying catalyst according to claim 4, wherein a ratio of an average particle diameter of the porous carrier with respect to the average particle diameter of the oxygen storage material is 5 or more.

9. The exhaust gas-purifying catalyst according to claim 4, wherein all components included in the catalyst carrier layer other than the oxygen storage material are alkali metal-free.
